(19) Europäisches Patentamt
European Patent Office
Office européen des brevets

(11) **EP 2 701 133 B1**

(12) **EUROPÄISCHE PATENTSCHRIFT**

(45) Veröffentlichungstag und Bekanntmachung des Hinweises auf die Patenterteilung:
**18.11.2015 Patentblatt 2015/47**

(51) Int Cl.:
*G01S 13/66* (2006.01)          *G01S 13/86* (2006.01)
*G08G 1/054* (2006.01)

(21) Anmeldenummer: **12181280.4**

(22) Anmeldetag: **22.08.2012**

(54) **Verfahren und Vorrichtungen zur Bildaufnahme eines geschwindigkeitsübertretenden Fahrzeugs**

Method and devices for taking a picture of a vehicle exceeding a certain speed

Procédés et dispositifs destinés à l'enregistrement d'image d'un véhicule en excès de vitesse

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.02.2014 Patentblatt 2014/09**

(73) Patentinhaber: **Kapsch TrafficCom AG 1120 Wien (AT)**

(72) Erfinder: **Abl, Alexander 9073 Viktring (AT)**

(74) Vertreter: **Weiser, Andreas et al Patentanwalt Kopfgasse 7 1130 Wien (AT)**

(56) Entgegenhaltungen:
**EP-A1- 1 220 181          EP-A1- 2 469 497
DE-A1-102005 036 562   DE-A1-102007 059 346
US-A- 5 801 943**

## Beschreibung

Die vorliegende Erfindung betrifft ein Verfahren und eine Vorrichtung zur Bildaufnahme von Fahrzeugen, die eine Strecke zwischen einer Einfahrt und einer Ausfahrt mit zu hoher Geschwindigkeit durchfahren.

Bestimmte Verkehrsüberwachungsaufgaben erfordern eine Bildaufnahme eines Fahrzeugs zur Beweissicherung für die Ahndung von Verkehrsdelikten. Beispiele hiefür sind die sog. "Section Control" bzw. "Punkt-zu-Punkt"-Geschwindigkeitsüberwachung, bei welcher die Ein- und Ausfahrtszeiten eines Fahrzeugs an dem vom Fahrzeug durchfahrenen Streckenabschnitt gemessen und zur Geschwindigkeitsbestimmung herangezogen werden. Die dazu eingesetzten Verkehrsüberwachungssysteme müssen strengen Datenschutzauflagen genügen, um eine unzulässige Erstellung von Bewegungsprofilen der Verkehrsteilnehmer möglichst auszuschließen. Beispielsweise erfordern die gesetzlichen Regelungen in Österreich und Deutschland für die Durchführung der Section Control, dass eine dauerhafte Identifizierung eines Fahrzeugs und seiner Durchfahrtsdaten nur im Falle einer Geschwindigkeitsübertretung erfolgen darf.

Bislang bekannte Systeme versuchen diese Datenschutzanforderungen zu erfüllen, indem nach einer Identifizierung des Fahrzeugs an der Ein- und Ausfahrt und einer darauf basierenden Geschwindigkeitsmessung dann, wenn kein Geschwindigkeitsdelikt vorliegt, alle aufgezeichneten Daten innerhalb einer garantierten Zeit, z.B. 8 Minuten, spurlos gelöscht werden (siehe F. Albrecht, "Section Control in Deutschland", Straßenverkehrsrecht, Zeitschrift für die Praxis des Verkehrsjuristen, 2009).

EP2469497A1 offenbart ein System zur Bildaufnahme von Fahrzeugen, die eine Strecke zwischen einer Einfahrt und einer Ausfahrt mit zu hoher Geschwindigkeit durchfahren, bei dem die Fahrzeuge sowohl bei der Einfahrt als auch bei der Ausfahrt identifiziert werden und die Identifikationsdaten verschlüsselt werden.

Diese Vorgehensweise ist weiterhin mit Unsicherheiten verbunden, weil das Fahrzeug an der Einfahrt anhand eines eindeutigen Fahrzeugkennzeichens identifiziert und an der Ausfahrt anhand desselben Fahrzeugkennzeichens wiedererkannt werden muss. Das Fahrzeugkennzeichen lässt jedoch stets einen eindeutigen Schluss auf den Fahrzeughalter zu, was die Privatsphäre desselben beeinträchtigt.

Die Erfindung setzt sich zum Ziel, Verfahren und Vorrichtungen zur Bildaufnahme von Fahrzeugen, die eine Strecke mit zu hoher Geschwindigkeit durchfahren, zu schaffen, welche höchstmöglichen Datenschutz für die sensiblen Durchfahrtsdaten, insbesondere die Identität des durchfahrenden Fahrzeugs, bieten.

Dieses Ziel wird in einem ersten Aspekt der Erfindung mit einem Verfahren der einleitend genannten Art erreicht, mit den Schritten:

Erfassen der Einfahrtszeit eines Fahrzeugs an der Einfahrt, Erzeugen einer eindeutigen und von der tatsächlichen Identität des Fahrzeugs unabhängigen Objektkennung für das Fahrzeug und Speichern der Einfahrtszeit unter der Objektkennung,
Mitverfolgen der Bewegung des Fahrzeugs, welches dabei fortlaufend durch die Objektkennung referenziert wird, über die gesamte Strecke mit Hilfe einer Sensoranordnung,
Erfassen der Ausfahrtszeit des durch die Objektkennung referenzierten Fahrzeugs an der Ausfahrt, und wenn ein Vergleich der erfassten Ausfahrtszeit mit der gespeicherten Einfahrtszeit eine einen Schwellwert überschreitende Geschwindigkeit anzeigt: Erfassen eines Ausfahrtsbildes des Fahrzeugs an der Ausfahrt.

Eine alternative Ausführungsform des Verfahrens der Erfindung umfasst die Schritte:

Erfassen eines Einfahrtsbildes und der Einfahrtszeit eines Fahrzeugs an der Einfahrt, Erzeugen einer eindeutigen und von der tatsächlichen Identität des Fahrzeugs unabhängigen Objektkennung für das Fahrzeug und Speichern des Einfahrtsbildes und der Einfahrtszeit unter der Objektkennung in einem Speicher,
Mitverfolgen der Bewegung des Fahrzeugs, welches dabei fortlaufend durch die Objektkennung referenziert wird, über die gesamte Strecke mit Hilfe einer Sensoranordnung,
Erfassen der Ausfahrtszeit des durch die Objektkennung referenzierten Fahrzeugs an der Ausfahrt,
Ermitteln der unter der Objektkennung gespeicherten Einfahrtszeit aus dem Speicher, und
wenn ein Vergleich der erfassten Ausfahrtszeit mit der ermittelten Einfahrtszeit eine einen Schwellwert überschreitende Geschwindigkeit anzeigt: Ermitteln des unter der Objektkennung gespeicherten Einfahrtsbildes,
andernfalls: Löschen des unter der Objektkennung gespeicherten Einfahrtsbildes.

Die Erfindung beruht auf einem völlig neuen Ansatz für eine streckenweise Geschwindigkeitskontrolle ("Section Control"), welche nicht mehr auf einem Identifizieren des Fahrzeugs an der Einfahrt und Wiedererkennung des Fahrzeugs anhand seiner Identifikation an der Ausfahrt beruht, sondern auf einem lückenlosen Mitverfolgen des die Strecke durchfahrenden Fahrzeuge. Während der Mitverfolgung ("tracking") wird das Fahrzeug ausschließlich durch eine beliebig anonyme Objektkennung, die unabhängig von der tatsächlichen Identität oder Merkmalen des Fahrzeugs vergeben wird, referenziert. Damit ist die Privatsphäre eines die Strecke durchfahrenden Fahrzeugs im "deliktfreien" Fall, d.h. wenn keine Geschwindigkeitsübertretung festgestellt werden kann, vollständig geschützt. Ausschließlich im Deliktfall wird ein Einfahrtsbild, auf welchem das Fahrzeug visuell identifizierbar ist, anhand der Objektkennung aus dem Speicher herausgesucht oder ein Ausfahrtsbild erzeugt; die Einfahrtsbilder von "deliktfreien" Objektkennungen werden hingegen nicht aus dem Speicher herausgesucht, sondern sofort gelöscht, bzw. von deliktfreien Fahrzeugen werden überhaupt keine Ausfahrtsbilder erzeugt. Im Ergebnis bleibt die Privatsphäre von deliktfreien Fahrzeugen vollständig geschützt, während gleichzeitig eine wirksame Section Control mit Bildaufnahme für Deliktfahrzeuge erreicht wird.

Das Mitverfolgen der Bewegung des Fahrzeugs über die Strecke kann auf alle in der Technik bekannten Arten erfolgen. Gemäß einer Ausführungsform der Erfindung wird dazu Radartechnik eingesetzt, und zwar bevorzugt eine Sensoranordnung aus zumindest zwei die Strecke lückenlos aufeinanderfolgend erfassenden Radargeräten, in deren Radarbildern das Fahrzeug detektiert und mitverfolgt wird. Beispiele solcher Sensoranordnungen zur Verkehrsflussüberwachung auf Granularitätsniveau einzelner Fahrzeuge sind die von der Firma Navtech unter der Marke ClearWay® oder von der Firma SMS smart microwave sensors GmbH als "Traffic Radar" vertriebenen Radar-Verkehrsüberwachungssysteme. Diese Systeme können Fahrzeugbewegungen anhand von für die Fahrzeuge vergebenen Objektkennungen über Radarbilder mehrerer aufeinanderfolgender Sensoren verfolgen ("tracking") und sind daher für die Umsetzung der vorliegenden Erfindung beispielhaft einsetzbar.

In einer alternativen Ausführungsform der Erfindung kann das Mitverfolgen mit Hilfe einer Sensoranordnung aus zumindest zwei die Strecke lückenlos aufeinanderfolgend erfassenden Kameras erfolgt, in deren Kamerabildern das Fahrzeug detektiert und mitverfolgt wird. Hiefür können z.B. bildverarbeitungsbasierte Video-Verkehrsüberwachungssysteme eingesetzt werden, wie sie beispielsweise in den Schriften CN 101800890 A, CN 101593422 A, CN 102254429 A, TW 200905619 A und TW 200905620 A beschrieben sind.

In der Einfahrtsbilder erstellenden zweiten Ausführungsform der Erfindung kann für Deliktfahrzeuge zusätzlich auch an der Ausfahrt eine Bildaufnahme angefertigt werden, während deliktfreie Fahrzeuge davon unberührt bleiben. Dazu wird gemäß einer weiteren Ausführungsform der Erfindung mit der Ausfahrtszeit auch ein Ausfahrtsbild des Fahrzeugs erfasst und gespeichert, und dieses Ausfahrtsbild wird sofort wieder gelöscht, wenn der genannte Vergleich keine schwellwertüberschreitende Geschwindigkeit anzeigt. In einer alternativen Ausführungsform wird überhaupt nur dann, wenn der genannte Vergleich eine schwellwertüberschreitende Geschwindigkeit anzeigt, ein Ausfahrtsbild des Fahrzeugs erfasst und gespeichert.

Die Verwendung von Ein- und Ausfahrtsbildern für Deliktfahrzeuge in Verbindung mit den entsprechenden Ein- und Ausfahrtszeiten ergibt stichhaltige Beweisdatensätze im Deliktfall, welche für die Verkehrsvergehensahndung ("enforcement") eingesetzt werden können. Bevorzugt werden dazu das Einfahrtsbild und die Einfahrtszeit als Einfahrtsdatensatz und das Ausfahrtsbild und die Ausfahrtszeit als Ausfahrtsdatensatz gespeichert und, wenn der genannte Vergleich eine schwellwertüberschreitende Geschwindigkeit anzeigt, werden der Einfahrtsdatensatz und der Ausfahrtsdatensatz ausgegeben, und wenn nicht, werden der Einfahrtsdatensatz und der Ausfahrtsdatensatz gelöscht.

Wie erörtert ist die an der Einfahrt einem Fahrzeug zugeordnete und bei der Mitverfolgung ("tracking") verwendete Objektkennung völlig losgelöst von der tatsächlichen Identität des Fahrzeugs. Bevorzugt wird dazu die Objektkennung zufällig gewählt oder zumindest fortlaufend einer Folge von eindeutigen Kennungen entnommen. Beide Varianten ergeben maximalen Schutz der Privatsphäre bzw. Anonymität der durchfahrenden Fahrzeuge.

In einem zweiten Aspekt erreicht die Erfindung ihre Ziele mit einer Vorrichtung zur Bildaufnahme von Fahrzeugen, die eine Strecke zwischen einer Einfahrt und einer Ausfahrt mit zu hoher Geschwindigkeit durchfahren, mit:

einer an der Einfahrt angeordneten ersten Zeitnehmeinrichtung, die zum Erfassen der Einfahrtszeit eines Fahrzeugs ausgebildet ist,

einer Recheneinrichtung, die zum Erzeugen einer eindeutigen und von der tatsächlichen Identität des Fahrzeugs unabhängigen Objektkennung für das Fahrzeug und Speichern der Einfahrtszeit unter der Objektkennung in einem Speicher ausgebildet ist,

einer Sensoranordnung, die dafür ausgebildet ist, die Objektkennung von der Recheneinrichtung zu empfangen und das durch die Objektkennung referenzierte Fahrzeug über die gesamte Strecke mitzuverfolgen,

einer an der Ausfahrt angeordneten zweiten Zeitnehmeinrichtung, die zum Erfassen der Ausfahrtszeit des durch die Objektkennung referenzierten Fahrzeugs ausgebildet ist, und

einer Auswerteeinrichtung, die dafür ausgebildet ist, die unter der Objektkennung gespeicherte Einfahrtszeit zu ermitteln und, wenn ein Vergleich der erfassten Ausfahrtszeit mit der ermittelten Einfahrtszeit eine einen Schwellwert überschreitende Geschwindigkeit anzeigt, mittels einer an der Ausfahrt angeordneten Kamera ein Ausfahrtsbild des Fahrzeugs zu erzeugen.

In einer alternativen Ausführungsform erreicht die Erfindung ihre Ziele mit:

einer an der Einfahrt angeordneten ersten Kamera und ersten Zeitnehmeinrichtung, die zum Erfassen eines Einfahrtsbildes und der Einfahrtszeit eines Fahrzeugs ausgebildet sind,

einer Recheneinrichtung, die zum Erzeugen einer eindeutigen und von der tatsächlichen Identität des Fahrzeugs unabhängigen Objektkennung für das Fahrzeug und Speichern des Einfahrtsbildes und der Einfahrtszeit unter der Objektkennung in einem Speicher ausgebildet ist,

einer Sensoranordnung, die dafür ausgebildet ist, die Objektkennung von der Recheneinrichtung zu empfangen und das durch die Objektkennung referenzierte Fahrzeug über die gesamte Strecke mitzuverfolgen,

einer zweiten Zeitnehmeinrichtung, die zum Erfassen der Ausfahrtszeit des durch die Objektkennung referenzierten Fahrzeugs ausgebildet ist, und

einer Auswerteeinrichtung, die dafür ausgebildet ist, die unter der Objektkennung gespeicherte Einfahrtszeit aus dem Speicher zu ermitteln und, wenn ein Vergleich der erfassten Ausfahrtszeit mit der ermittelten Einfahrtszeit eine einen Schwellwert überschreitende Geschwindigkeit anzeigt, das unter der Objektkennung gespeicherte Einfahrtsbildes zu ermitteln, oder andernfalls das unter der Objektkennung gespeicherte Einfahrtsbild zu löschen.

Hinsichtlich der Vorteile und weiterer bevorzugten Merkmale der erfindungsgemäßen Vorrichtungen wird per analogiam auf die obigen Ausführungen zu den Verfahren und die nachfolgende Beschreibung eines bevorzugten Ausführungsbeispiels verwiesen, welche unter Bezugnahme auf die begleitenden Zeichnungen gegeben wird, in denen zeigt:

Fig. 1 die Vorrichtungen der Erfindung in Blockschaltbildform in Verbindung mit einer schematisch dargestellten Geschwindigkeitsmessstrecke ("Section Control"); und

Fig. 2 ein Sequenzdiagramm der Verfahren der Erfindung.

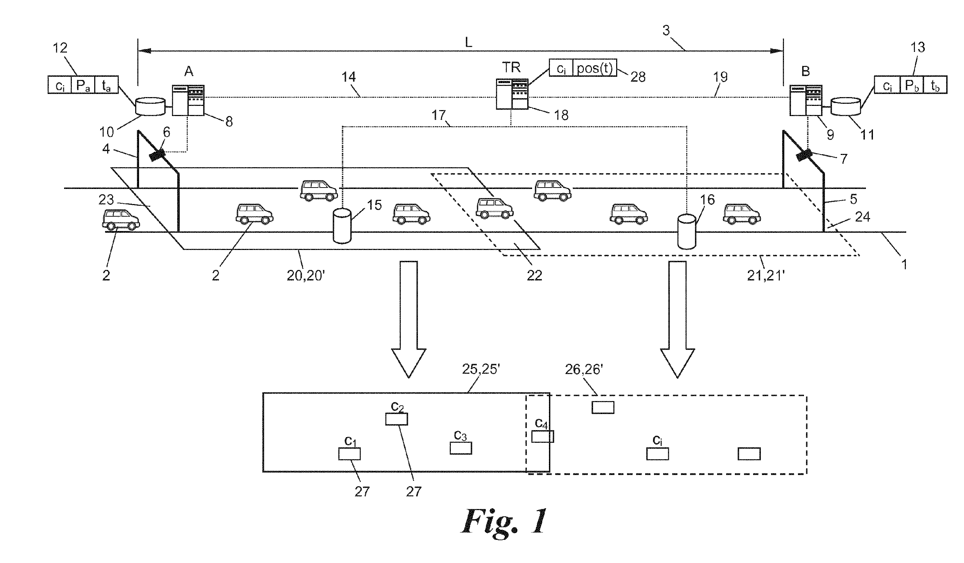

In Fig. 1 ist eine Straße 1 gezeigt, auf der Fahrzeuge 2 eine Strecke 3 bekannter Länge L von einer Einfahrt 4 zu einer Ausfahrt 5 durchfahren. An der Einfahrt 4 der Strecke 3 ist eine Einfahrtsstation A angeordnet, und an der Ausfahrt 5 eine Ausfahrtsstation B.

Die Ein- und Ausfahrtsstationen A, B umfassen jeweils zumindest eine Kamera 6, 7 und einen damit verbundenen Stationsrechner 8, 9 mit Speicher 10, 11. Die Kameras 6, 7 sind - in Zusammenarbeit mit den Stationsrechnern 8, 9 - dafür ausgebildet, ein Einfahrtsbild $P_a$ eines die Einfahrt 4 durchfahrenden Fahrzeugs 2 sowie ein Ausfahrtsbild $P_b$ eines die Ausfahrt 5 durchfahrenden Fahrzeugs 2 aufzunehmen.

Die Kameras 6, 7 können ein Fahrzeug 2 beliebig von vorne, schräg von der Seite oder von hinten erfassen; jedenfalls fertigen sie die Einfahrts- und Ausfahrtsbilder $P_a$, $P_b$ so an, dass ein eindeutiges Fahrzeugmerkmal, z.B. die amtliche Kennzeichentafel, Nummerntafel, ein sonstiges eindeutiges Merkmal des Fahrzeugs 2 od.dgl., auf den Bildern $P_a$, $P_b$ visuell identifizierbar ist.

Die Kameras 6, 7 können sowohl fotografische Kameras sein, die jeweils ein Einzelbild $P_a$, $P_b$ aufnehmen und deren Bildaufnahme durch eine entsprechende (nicht dargestellte) Fahrzeugdetektionseinrichtung ausgelöst werden kann, z.B. eine Lichtschranke, eine in der Fahrbahn verlegte Induktionsschleife, ein Radar-, Laser-, Lidar- oder sonstiger Fahrzeugdetektionssensor usw. Die Kameras 6, 7 können aber auch Videokameras sein und die Detektion eines Fahrzeugs 2 kann z.B. durch entsprechende Bildverarbeitungsalgorithmen an Ausgangsvideostreams der Kameras 6, 7 erfolgen, um das Auftreten eines Fahrzeugs 2 darin zu detektieren und ein Einzelbild $P_a$, $P_b$ oder eine Bildsequenz daraus herauszulösen; auch solche Bildsequenzen werden im weiteren unter die Oberbegriffe "Einfahrtsbild $P_a$" bzw. "Ausfahrtsbild $P_b$" subsumiert.

Gleichzeitig mit der Erfassung des Ein- bzw. Ausfahrtsbildes $P_a$, $P_b$ eines die Ein- bzw. Ausfahrt 4, 5 durchfahrenden Fahrzeugs wird die jeweils aktuelle Zeit (Uhrzeit, Weltzeit, Systemzeit usw.) als Einfahrtszeit $t_a$ bzw. Ausfahrtszeit $t_b$ erfasst. Die Ein- und Ausfahrtszeiten $t_a$, $t_b$ können z.B. als Zeitstempel von den Kameras 6, 7 oder dem Stationsrechner 8, 9 den Ein- und Ausfahrtsbildern $P_a$, $P_b$ hinzugefügt oder gleich direkt einem Timecode der Videostreams der Kameras 6, 7 entnommen werden.

In der Einfahrtsstation A werden das Einfahrtsbild $P_a$ und die Einfahrtszeit $t_a$ als Einfahrtsdatensatz 12 für Beweiszwecke im Speicher 10 gespeichert, und in der Ausfahrtsstation B das Ausfahrtsbild $P_b$ und die Ausfahrtszeit $t_b$ als Ausfahrtsdatensatz 13 im Speicher 11. Zum Wiederauffinden des Einfahrtsdatensatzes 12 eines Fahrzeugs 2 wird vom Stationsrechner 8 der Einfahrtsstation A dabei jedem einfahrenden Fahrzeug 2 eine eindeutige Objektkennung $c_1$, $c_2$,..., allgemein $c_i$, zugeordnet, die mit dem Einfahrtsdatensatz 12 mitgespeichert wird, und zwar so, dass der Einfahrtsdatensatz 12 aus dem Speicher 10 unter dieser Objektkennung $c_i$ abrufbar bzw. wiederauffindbar ist.

Die Objektkennung $c_i$ ist völlig beliebiger Art, solange sie eindeutig ist, und losgelöst bzw. unabhängig von der tatsächlichen Identität des Fahrzeugs 2, z.B. seinem Fahrzeugkennzeichen. Genauer gesagt braucht sie nur für jene maximale Anzahl von Fahrzeugen 2 eindeutig zu sein, welche sich gleichzeitig auf der Strecke 3 befinden können, da die Objektkennung $c_i$ eines ausfahrenden Fahrzeugs 2 anschließend wieder für ein einfahrendes Fahrzeug 2 verwendet werden könnte. Bevorzugt werden die Objektkennungen $c_i$ als Zufallswerte vergeben; alternativ könnten sie auch fortlaufend einer Folge (Liste) von vorgegebenen, jeweils eindeutigen Kennungen entnommen werden.

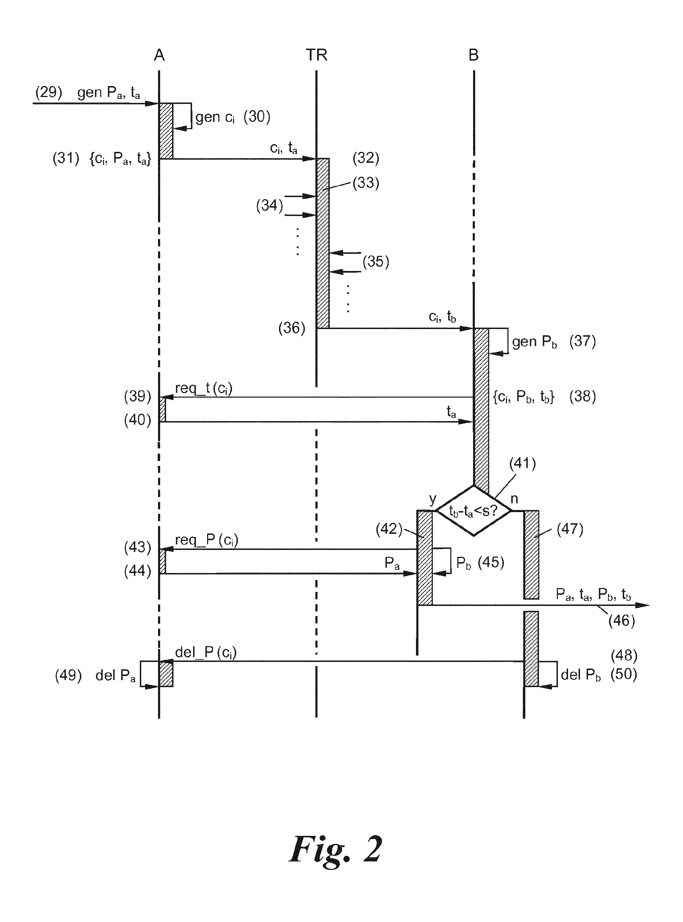

Nach dem Eintritt in die Strecke 3 ist somit jedes Fahrzeug 2 durch die ihm zugeteilte Objektkennung $c_i$ identifiziert. Die Objektkennung $c_i$ wird von der Einfahrtsstation A einer Sensoranordnung bzw. einem Trackingsystem TR übergeben, z.B. über den drahtgebundenen oder drahtlosen Datenweg 14, wie auch später noch anhand von Fig. 2 ausführlich erläutert wird.

Die Sensoranordnung TR umfasst in dem in Fig. 1 gezeigten Beispiel zwei oder mehr entlang der Strecke 3 aufeinanderfolgend aufgestellte Radargeräte 15, 16 und einen mit diesen über ein Datennetzwerk 7 verbundenen Tracking-Rechner 18, welcher seinerseits über den Datenpfad 14 mit der Einfahrtsstation A und einen weiteren Datenpfad 19 mit der Ausfahrtsstation B in Verbindung steht. Es versteht sich, dass beliebige zwei oder alle drei der Komponenten Stationsrechner 8, Tracking-Rechner 18 und Stationsrechner 9 auch in einer einzigen physischen Einheit realisiert sein könnten.

Jedes der Radargeräte 15, 16 hat einen eigenen Erfassungsbereich 20, 21, wobei die Erfassungsbereiche 20, 21 aller Radargeräte 15, 16 der Sensoranordnung TR die gesamte Strecke 3 lückenlos abdecken, im vorliegenden Fall sogar einander teilüberlappend bei 22 und über die Ein- und Ausfahrten 4, 5 hinausgehend bei 23 und 24.

Fig. 1 zeigt in der unteren Hälfte schematisch die "Radarbilder" 25, 26, welche von den Radargeräten 15, 16 für ihren jeweiligen Erfassungsbereich 20, 21 angefertigt werden und in denen die darin radardetektierten Fahrzeuge 2 als Radartreffer ("targets") bzw. symbolische Objekte 27 mit ihrer jeweiligen Objektkennung $c_i$ identifiziert sind. Beispiele solcher Multisensor-Radartrackingsysteme für Verkehrsüberwachungsaufgaben, welche auch ein "Handover" der Objektkennungen $c_i$ der getrackten Objekte 27 von einem Sensor 15 zum nächsten Sensor 16, d.h. von einem Radarbild 25 zum nächsten Radarbild 26, durchführen, sind z.B. die von der Firma Navtech unter der Bezeichnung ClearWay® oder von der Firma SMS smart microwave sensors GmbH als "Traffic Radar" vertriebenen Verkehrsüberwachungssysteme.

Die Sensoranordnung TR verfügt auf diese Weise zu jedem Zeitpunkt über genaue Kenntnis der aktuellen Position $pos(t)$ eines Objekts 27 mit der Objektkennung $c_i$ auf der Straße 3, siehe den beispielhaften Datensatz 28 im Tracking-Rechner 18. Die Sensoranordnung TR ist dadurch in der Lage, bei Erreichen der Ausfahrt 5 der Ausfahrtsstation B über den Pfad 19 die Objektkennung $c_i$ des gerade die Ausfahrt 5 durchfahrenden Fahrzeugs 2 mitzuteilen. Der Stationsrechner 9 der Ausfahrtsstation B kann daraufhin anhand der zu einem ausfahrenden Fahrzeugs 2 empfangenen Objektkennung $c_i$ die Einfahrtszeit $t_a$ dieses Fahrzeugs 2 von der Einfahrtsstation A anzufordern - oder bereits mit der Objektkennung $c_i$ von der Einfahrtsstation A erhalten haben - und durch einen Vergleich von Ein- und Ausfahrtszeit $t_a$, $t_b$ eine Geschwindigkeitsübertretung des Fahrzeugs 2 für die Durchfahrt der Strecke 3 festzustellen, wie nun anhand von Fig. 2 im Detail erörtert wird.

Fig. 2 zeigt das gesamte Verfahren in Fluss-bzw. Sequenzdiagrammform. Das Verfahren wird durch die Detektion eines Fahrzeugs 2 in der Einfahrtsstation A ausgelöst, wodurch das Einfahrtsbild $P_a$ (dieses optional, siehe später) und die Einfahrtszeit $t_a$ erfasst werden (Schritt 29). Die Einfahrtsstation A, z.B. ihr Stationsrechner 8, generiert die Objektkennung $c_i$ für das einfahrende Fahrzeug 2 in Schritt 30 und speichert den Einfahrtsdatensatz 12 aus Objektkennung $c_i$, (optionalem) Einfahrtsbild $P_a$ und Einfahrtszeit $t_a$ im Speicher 10 (Schritt 31).

In Schritt 32 werden die Objektkennung $c_i$ - bevorzugt zusammen mit der Einfahrtszeit $t_a$, um die Zuordnung zu erleichtern - der Sensoranordnung TR übergeben, woraufhin diese für die Objektkennung $c_i$ einen individuellen Tracking-Prozess 33 startet. Im Verlauf des Tracking-Prozesses 33 empfängt die Sensoranordnung TR, insbesondere ihr Tracking-Rechner 18, fortlaufend Daten von den verschiedensten Sensoren 15, 16, siehe Schritte 34, 35.

Sobald die Sensoranordnung TR feststellt, dass das Fahrzeug 2 bzw. Objekt 27 mit der Objektkennung $c_i$ die Ausfahrt 5 erreicht bzw. durchfährt, übergibt sie in Schritt 36 diese Objektkennung $c_i$ - gegebenenfalls mit der Ausfahrtszeit $t_b$ - an die Ausfahrtsstation B. Die Ausfahrtszeit $t_b$ könnte alternativ auch von der Ausfahrtsstation B selbst erfasst werden.

In Schritt 37 erzeugt die Ausfahrtsstation B das Ausfahrtsbild $P_b$ des ausfahrenden Fahrzeugs 2. In einer alternativen Ausführungsform kann Schritt 37 entfallen oder erst später, nach Feststellung eines Delikts ausgeführt werden.

Die Ausfahrtsstation B verfügt nun über die Objektkennung $c_i$ des gerade ausfahrenden Fahrzeugs 2 und kann diese in Schritt 38 zusammen mit dem Ausfahrtsbild $P_b$ und der Ausfahrtszeit $t_b$ als Ausfahrtsdatensatz 13 im Speicher 11 speichern. Auch dies kann gegebenenfalls erst später nach Feststellung eines Delikts erfolgen.

In Schritt 39 fordert die Ausfahrtsstation B mit dem Befehl req_t($c_i$) die zur Objektkennung $c_i$ in der Einfahrtsstation A gespeicherte Einfahrtszeit $t_a$ an, genauer aus dem Einfahrtsdatensatz 12 im Speicher 10. Die Einfahrtsstation A antwortet in Schritt 40 mit dem Zurücksenden der gewünschten Einfahrtszeit $t_a$ für die Objektkennung $c_i$. Schritt 40 kann auch ohne vorherige Aufforderung von der Einfahrtsstation A durchgeführt werden.

In dem Vergleichs- bzw. Entscheidungsschritt 41 kann nun die Ausfahrtsstation B, genauer deren Stationsrechner 9 als Auswerteeinrichtung, die Einfahrtszeit $t_a$ mit der Ausfahrtszeit $t_b$ vergleichen, um festzustellen, ob die Strecke 3 vom Fahrzeug 2 mit der Objektkennung $c_i$ zu schnell durchfahren wurde. Der Vergleich kann beispielsweise dadurch erfolgen, dass überprüft wird, ob die Differenz zwischen Ausfahrtszeit $t_b$ und Einfahrtszeit $t_a$ unter einem vorgegebenen Schwellwert s liegt, welcher die kürzeste Zeitspanne darstellt, die das Fahrzeug 2 beim Durchfahren der Strecke 3 benötigen darf: War das Fahrzeug schneller als die auf der Strecke 3 erlaubte Höchstgeschwindigkeit, dann ist die Differenz $t_b - t_a$ kleiner als diese zulässige Minimalzeit s und es liegt eine Geschwindigkeitsübertretung ("Geschwindigkeitsdelikt") vor, siehe Zweig "y" von Entscheidungsschritt 41. War das Fahrzeug 2 jedoch langsamer als die erlaubte Höchstgeschwindigkeit, dann liegt kein Delikt vor und es wird der andere Zweig "n" der Entscheidung 41 betreten.

Es versteht sich, dass anstelle eines Zeitdifferenzvergleichs auch direkt die Geschwindigkeit des Fahrzeugs anhand der Länge L der Strecke 3 aus der bekannten Beziehung

$$v = L/(t_b - t_a)$$

berechnet und im Schritt 41 mit einer erlaubten Höchstgeschwindigkeit verglichen werden könnte.

Im Deliktfall (Zweig "y" der Entscheidung 41 bzw. Ast 42) fordert die Ausfahrtsstation B in Schritt 43 mit dem Anforderungsbefehl req_P($c_i$) das unter der Objektkennung $c_i$ gespeicherte Einfahrtsbild $P_a$ von der Einfahrtsstation A an, genauer aus dem Einfahrtsdatensatz 12 im Speicher 10. In Schritt 44 antwortet die Einfahrtsstation A mit der Zurückgabe des Einfahrtsbildes $P_a$ bzw. des gesamten Einfahrtsdatensatzes 12 an die Ausfahrtsstation B. In der Ausfahrtsstation B kann in dem optionalen Schritt 45 das bereits in Schritt 37 angefertigte Ausfahrtsbild $P_b$ aus dem Ausfahrtsdatensatz 13 oder der gesamte Ausfahrtsdatensatz 13 ermittelt werden. Alternativ könnte, wenn Schritt 37 (und optional auch Schritt 38 entfällt), auch erst in Schritt 45 das Ausfahrtsbild $P_b$ von der Kamera 7 erzeugt und (optional) als Ausfahrtsdatensatz 13 mit der Ausfahrtszeit $t_b$ gespeichert werden. Eine weitere Variante ist, dass in der Einfahrtsstation A kein Einfahrtsbild $P_a$ erzeugt wurde und somit die Schritte 43, 44 entfallen, und lediglich im Deliktfall 42 in Schritt 45 ein Ausfahrtsbild $P_b$ des Fahrzeugs 2 erzeugt wird, d.h. es gibt kein Einfahrtsbild $P_a$.

Die Ausfahrtsstation B verfügt im Deliktfall 42 nun über alle Daten für die Ahndung des Geschwindigkeitsdelikts, u.zw. das Einfahrtsbild $P_a$ und/oder das Ausfahrtsbild $P_b$, eventuell ergänzt um eine oder beide Zeiten $t_a$, $t_b$, bevorzugt über den kompletten Einfahrtsdatensatz 12 und den kompletten Ausfahrtsdatensatz 13, und kann in Schritt 46 diese Daten ausgeben, z.B. auf einer Anzeige oder durch Versenden an eine Verkehrsüberwachungszentrale, Behörde, ein Kontrollgerät der Exekutive usw.

Im deliktfreien Fall (Zweig "n" der Entscheidung 41 bzw. Ast 47) sendet die Ausfahrtsstation B in Schritt 48 einen Löschbefehl del_P($c_i$) an die Einfahrtsstation A hinsichtlich der Objektkennung $c_i$, woraufhin die Einfahrtsstation A im Schritt 49 das unter der Objektkennung $c_i$ gespeicherte Einfahrtsbild $P_a$, bevorzugt gleich den gesamten Einfahrtsdatensatz 12, unwiderruflich aus dem Speicher 10 löscht. In gleicher Weise kann die Ausfahrtsstation B auch selbst in einem Schritt 50 das Ausfahrtsbild $P_b$, falls sie ein solches angefertigt hat, unwiederbringlich löschen. Wenn ein Ausfahrtsdatensatz 13 in der Datenbank 11 gespeichert wurde, wird dieser in Schritt 50 zur Gänze gelöscht. Wenn kein Einfahrtsbild $P_a$ angefertigt wurde, entfallen die Schritte 48 und 49.

Der Speicher 10 ist bevorzugt vor unberechtigten Datenzugriffen auf das Einfahrtsbild $P_a$ geschützt, sodass er z.B. nur unter Einhaltung der zeitlichen Abfolge der Verfahrensschritte 39 und 43 das Einfahrtsbild $P_a$ ausgibt, und/oder nur an eine sich entsprechend durch kryptographische Zertifikate, Signaturen, Verschlüsselungen usw. ausweisende Entität wie - im vorliegenden Fall - den Stationsrechner 9 der Ausfahrtsstation B.

Anstelle der in Fig. 1 gezeigten Radargeräte 15, 16 kann die Sensoranordnung TR auch auf Basis einer anderen Bewegungstracking-Technologie arbeiten. Beispielsweise können anstelle der Radargeräte 15, 16 zwei oder mehr Kameras entlang der Strecke 3 aufgestellt werden, welche optische Erfassungsbereiche 20', 21' haben, um in ihren Kamerabildern 25', 26' die Strecke 3 lückenlos abzubilden. Die Fahrzeuge 2 bzw. Objekte 27 können dann in den Kamerabildern 25', 26' mit Hilfe entsprechender Bildverarbeitungsverfahren detektiert und anhand ihrer Objektkennungen $c_i$ referenziert bewegungsverfolgt werden.

Auch weitere Arten von Sensoranordnungen TR sind denkbar, beispielsweise eine Kette von Lichtschranken, welche entlang der Strecke 3 angeordnet wird und in der Lage ist, sich darauf bewegende Fahrzeuge mitzuverfolgen; eine Kette von induktiven Sensoren, Näherungssensoren, Laserscannern usw., in deren gesamten Erfassungsbildern die sich bewegenden Fahrzeuge 2 als sich bewegende Objekte 27 detektierbar und in ihrer Bewegung über die gesamte Strecke 3 mitverfolgbar sind.

Die Erfindung ist demgemäß nicht auf die dargestellten Ausführungsformen beschränkt, sondern umfasst alle Varianten und Modifikationen, die in den Rahmen der angeschlossenen Ansprüche fallen.

**Patentansprüche**

1.  Verfahren zur Bildaufnahme von Fahrzeugen (2), die eine Strecke (3) zwischen einer Einfahrt (4) und einer Ausfahrt (5) mit zu hoher Geschwindigkeit durchfahren, umfassend:

    Erfassen (29) der Einfahrtszeit ($t_a$) eines Fahrzeugs (2) an der Einfahrt (4), Erzeugen (30) einer eindeutigen und von der tatsächlichen Identität des Fahrzeugs unabhängigen Objektkennung ($c_i$) für das Fahrzeug (2) und Speichern (31) der Einfahrtszeit ($t_a$) unter der Objektkennung ($c_i$),
    Mitverfolgen (33) der Bewegung des Fahrzeugs (2), welches dabei fortlaufend durch die Objekt-

kennung ($c_i$) referenziert wird, über die gesamte Strecke (3) mit Hilfe einer Sensoranordnung (TR),
Erfassen (36, 37) der Ausfahrtszeit ($t_b$) des durch die Objektkennung ($c_i$) referenzierten Fahrzeugs (2) an der Ausfahrt (5), und
wenn ein Vergleich (41) der erfassten Ausfahrtszeit ($t_b$) mit der gespeicherten Einfahrtszeit ($t_a$) eine einen Schwellwert (s) überschreitende Geschwindigkeit anzeigt: Erfassen (37, 45) eines Ausfahrtsbildes ($P_b$) des Fahrzeugs (2) an der Ausfahrt (5).

2. Verfahren zur Bildaufnahme von Fahrzeugen (2), die eine Strecke (3) zwischen einer Einfahrt (4) und einer Ausfahrt (5) mit zu hoher Geschwindigkeit durchfahren, umfassend:

Erfassen (29) eines Einfahrtsbildes ($P_a$) und der Einfahrtszeit ($t_a$) eines Fahrzeugs (2) an der Einfahrt (4), Erzeugen (30) einer eindeutigen und von der tatsächlichen Identität des Fahrzeugs unabhängigen Objektkennung ($c_i$) für das Fahrzeug (2) und Speichern (31) des Einfahrtsbildes ($P_a$) und der Einfahrtszeit ($t_a$) unter der Objektkennung ($c_i$),
Mitverfolgen (33) der Bewegung des Fahrzeugs (2), welches dabei fortlaufend durch die Objektkennung ($c_i$) referenziert wird, über die gesamte Strecke (3) mit Hilfe einer Sensoranordnung (TR),
Erfassen (36, 37) der Ausfahrtszeit ($t_b$) des durch die Objektkennung ($c_i$) referenzierten Fahrzeugs (2) an der Ausfahrt (5), und
wenn ein Vergleich (41) der erfassten Ausfahrtszeit ($t_b$) mit der gespeicherten Einfahrtszeit ($t_a$) eine einen Schwellwert (s) überschreitende Geschwindigkeit anzeigt: Ermitteln (43, 44) des unter der Objektkennung ($c_i$) gespeicherten Einfahrtsbildes ($P_a$),
andernfalls: Löschen (49) des unter der Objektkennung ($c_i$) gespeicherten Einfahrtsbildes ($P_a$).

3. Verfahren nach Anspruch 1 oder 2, **dadurch gekennzeichnet, dass** das Mitverfolgen (33) mit Hilfe einer Sensoranordnung (TR) aus zumindest zwei die Strecke (3) lückenlos aufeinanderfolgend erfassenden Radargeräten (15, 16) erfolgt, in deren Radarbildern (25, 26) das Fahrzeug (2) detektiert und mitverfolgt wird.

4. Verfahren nach Anspruch 1 oder 2, **dadurch gekennzeichnet, dass** das Mitverfolgen (33) mit Hilfe einer Sensoranordnung (TR) aus zumindest zwei die Strecke (3) lückenlos aufeinanderfolgend erfassenden Kameras erfolgt, in deren Kamerabildern (25', 26') das Fahrzeug (2) detektiert und mitverfolgt wird.

5. Verfahren nach einem der Ansprüche 2 bis 4, **dadurch gekennzeichnet, dass** mit der Ausfahrtszeit ($t_b$) auch ein Ausfahrtsbild ($P_b$) des Fahrzeugs (2) erfasst (37) und gespeichert wird, und dass das Ausfahrtsbild ($P_b$) gelöscht wird (50), wenn der genannte Vergleich (41) keine schwellwertüberschreitende Geschwindigkeit anzeigt.

6. Verfahren nach einem der Ansprüche 2 bis 4, **dadurch gekennzeichnet, dass** nur dann, wenn der genannte Vergleich (41) eine schwellwertüberschreitende Geschwindigkeit anzeigt, ein Ausfahrtsbild ($P_b$) des Fahrzeugs (2) erfasst (45) und gespeichert wird.

7. Verfahren nach Anspruch 5 oder 6, **dadurch gekennzeichnet, dass** das Einfahrtsbild ($P_a$) und die Einfahrtszeit ($t_a$) als Einfahrtsdatensatz (12) und das Ausfahrtsbild ($P_b$) und die Ausfahrtszeit ($t_b$) als Ausfahrtsdatensatz (13) gespeichert werden und dass, wenn der genannte Vergleich (41) eine schwellwertüberschreitende Geschwindigkeit anzeigt, der Einfahrtsdatensatz (12) und der Ausfahrtsdatensatz (13) ausgegeben werden (46), und wenn nicht, der Einfahrtsdatensatz (12) und der Ausfahrtsdatensatz (13) gelöscht werden (49, 50).

8. Verfahren nach einem der Ansprüche 1 bis 7, **dadurch gekennzeichnet, dass** die Objektkennung ($c_i$) zufällig gewählt wird (30).

9. Verfahren nach einem der Ansprüche 1 bis 7, **dadurch gekennzeichnet, dass** die Objektkennung ($c_i$) fortlaufend einer Folge von eindeutigen Kennungen entnommen wird (30).

10. Vorrichtung zur Bildaufnahme von Fahrzeugen (2), die eine Strecke (3) zwischen einer Einfahrt (4) und einer Ausfahrt (5) mit zu hoher Geschwindigkeit durchfahren, mit:

einer an der Einfahrt (4) angeordneten ersten Zeitnehmeinrichtung (6, 8), die zum Erfassen der Einfahrtszeit ($t_a$) eines Fahrzeugs (2) ausgebildet ist,
einer Recheneinrichtung (8), die zum Erzeugen einer eindeutigen und von der tatsächlichen Identität des Fahrzeugs unabhängigen Objektkennung ($c_i$) für das Fahrzeug (2) und Speichern der Einfahrtszeit ($t_a$) unter der Objektkennung ($c_i$) in einem Speicher (10) ausgebildet ist,
einer Sensoranordnung (TR), die dafür ausgebildet ist, die Objektkennung ($c_i$) von der Recheneinrichtung (8) zu empfangen und das durch die Objektkennung ($c_i$) referenzierte Fahrzeug (2) über die gesamte Strecke (3) mitzuverfolgen,
einer an der Ausfahrt (5) angeordneten zweiten Zeitnehmeinrichtung (7, 9), die zum Erfassen der Ausfahrtszeit ($t_b$) des durch die Objektkennung ($c_i$) referenzierten Fahrzeugs (2) ausgebildet ist, und

einer Auswerteeinrichtung (9), die dafür ausgebildet ist, die unter der Objektkennung ($c_i$) gespeicherte Einfahrtszeit ($t_a$) zu ermitteln und, wenn ein Vergleich der erfassten Ausfahrtszeit ($t_b$) mit der ermittelten Einfahrtszeit ($t_a$) eine einen Schwellwert überschreitende Geschwindigkeit anzeigt, mittels einer an der Ausfahrt (3) angeordneten Kamera (7) ein Ausfahrtsbild ($P_b$) des Fahrzeugs (2) zu erzeugen.

11. Vorrichtung zur Bildaufnahme von Fahrzeugen (2), die eine Strecke (3) zwischen einer Einfahrt (4) und einer Ausfahrt (5) mit zu hoher Geschwindigkeit durchfahren, mit:

einer an der Einfahrt (4) angeordneten ersten Kamera (6) und ersten Zeitnehmeinrichtung (6, 8), die zum Erfassen eines Einfahrtsbildes ($P_a$) und der Einfahrtszeit ($t_a$) eines Fahrzeugs (2) ausgebildet sind,

einer Recheneinrichtung (8), die zum Erzeugen einer eindeutigen und von der tatsächlichen Identität des Fahrzeugs unabhängigen Objektkennung ($c_i$) für das Fahrzeug (2) und Speichern des Einfahrtsbildes ($P_a$) und der Einfahrtszeit ($t_a$) unter der Objektkennung ($c_i$) in einem Speicher (10) ausgebildet ist,

einer Sensoranordnung (TR), die dafür ausgebildet ist, die Objektkennung ($c_i$) von der Recheneinrichtung (8) zu empfangen und das durch die Objektkennung ($c_i$) referenzierte Fahrzeug (2) über die gesamte Strecke (3) mitzuverfolgen,

einer zweiten Zeitnehmeinrichtung (7, 9), die zum Erfassen der Ausfahrtszeit ($t_b$) des durch die Objektkennung ($c_i$) referenzierten Fahrzeugs (2) ausgebildet ist, und

einer Auswerteeinrichtung (9), die dafür ausgebildet ist, die unter der Objektkennung ($c_i$) gespeicherte Einfahrtszeit ($t_a$) zu ermitteln und, wenn ein Vergleich der erfassten Ausfahrtszeit ($t_b$) mit der ermittelten Einfahrtszeit ($t_a$) eine einen Schwellwert überschreitende Geschwindigkeit anzeigt, das unter der Objektkennung ($c_i$) gespeicherte Einfahrtsbildes ($P_a$) zu ermitteln, oder andernfalls das unter der Objektkennung ($c_i$) gespeicherte Einfahrtsbild ($P_a$) zu löschen.

12. Vorrichtung nach Anspruch 10 oder 11, **dadurch gekennzeichnet, dass** die Sensoranordnung (TR) zumindest zwei die Strecke (3) lückenlos aufeinanderfolgend erfassende Radargeräte (15, 16) umfasst und dafür ausgebildet ist, in den Radarbildern (25, 26) der Radargeräte (15, 16) das Fahrzeug (2) zu detektieren und mitzuverfolgen.

13. Vorrichtung nach Anspruch 10 oder 11, **dadurch gekennzeichnet, dass** die Sensoranordnung (TR) zumindest zwei die Strecke (3) lückenlos aufeinanderfolgend erfassende Kameras umfasst und dafür ausgebildet ist, in den Kamerabildern (25', 26') der Kameras das Fahrzeug (2) zu detektieren und mitzuverfolgen.

14. Vorrichtung nach einem der Ansprüche 11 bis 13, **gekennzeichnet durch** eine an der Ausfahrt (5) angeordnete zweite Kamera (7) zum Erfassen eines Ausfahrtsbildes ($P_b$) des Fahrzeugs (2), wobei die Auswerteeinrichtung (9) dafür ausgebildet ist, das Ausfahrtsbild ($P_b$) zu löschen, wenn der genannte Vergleich keine schwellwertüberschreitende Geschwindigkeit anzeigt.

15. Vorrichtung nach einem der Ansprüche 11 bis 13, **dadurch gekennzeichnet, dass** die Auswerteeinrichtung (8) dafür ausgebildet ist, mittels einer an der Ausfahrt (5) angeordneten zweiten Kamera (7) ein Ausfahrtsbild ($P_b$) des Fahrzeugs (2) zu erfassen, wenn der genannte Vergleich eine schwellwertüberschreitende Geschwindigkeit anzeigt.

## Claims

1. A method for recording images of vehicles (2) that pass through a section (3) between an entrance (4) and an exit (5) at excessive speed, comprising the following steps:

capturing (29) the entry time ($t_a$) of a vehicle (2) at the entrance (4), generating (30) a unique object identifier ($c_i$), which is independent from the actual identity of the vehicle, for the vehicle (2) and storing (31) the entry time ($t_a$) under the object identifier ($c_i$) ;
tracking (33) the movement of the vehicle (2), which is being continuously referenced during the tracking by way of the object identifier ($c_i$), over the entire section (3) using a sensor arrangement (TR);
capturing (36, 37) the exit time ($t_b$) of the vehicle (2) that is referenced by way of the object identifier ($c_i$) at the exit (5); and
if a comparison (41) of the captured exit time ($t_b$) to the stored entry time ($t_a$) indicates a speed that exceeds a threshold value (s): capturing (37, 45) an exit image ($P_b$) of the vehicle (2) at the exit (5).

2. A method for recording images of vehicles (2) that pass through a section (3) between an entrance (4) and an exit (5) at excessive speed, comprising the following steps:

> capturing (29) an entry image ($P_a$) and the entry time ($t_a$) of a vehicle (2) at the entrance (4), generating (30) a unique object identifier ($c_i$), which is independent from the actual identity of the vehicle, for the vehicle (2) and storing (31) the entry image ($P_a$) and the entry time ($t_a$) under the object identifier ($c_i$) ;
> tracking (33) the movement of the vehicle (2), which is being continuously referenced during the tracking by way of the object identifier ($c_i$), over the entire section (3) using a sensor arrangement (TR);
> capturing (36, 37) the exit time ($t_b$) of the vehicle (2) that is referenced by way of the object identifier ($c_i$) at the exit (5); and
> if a comparison (41) of the captured exit time ($t_b$) to the stored entry time ($t_a$) indicates a speed that exceeds a threshold value (s): determining (43, 44) the entry image ($P_a$) stored under the object identifier ($c_i$);
> otherwise: deleting (49) the entry image ($P_a$) stored under the object identifier ($c_i$).

**3.** The method according to claim 1 or 2, **characterized in that** the tracking (33) is carried out using a sensor arrangement (TR) comprising at least two radar devices (15, 16), which contiguously capture the section (3) without interruption and in the radar images (25, 26) of which the vehicle is detected and tracked.

**4.** The method according to claim 1 or 2, **characterized in that** the tracking (33) is carried out using a sensor arrangement (TR) comprising at least two cameras, which contiguously capture the section (3) without interruption and in the camera images (25', 26') of which the vehicle is detected and tracked.

**5.** The method according to any one of claims 2 to 4, **characterized in that** an exit image ($P_b$) of the vehicle (2) is captured (37) and stored together with the exit time ($t_b$), and the exit image ($P_b$) is deleted (50) if said comparison (41) indicates no speed that exceeds the threshold value.

**6.** The method according to any one of claims 2 to 4, **characterized in that** an exit image ($P_b$) of the vehicle (2) is captured (45) and stored only if said comparison (41) indicates a speed that exceeds the threshold value.

**7.** The method according to claim 5 or 6, **characterized in that** the entry image ($P_a$) and the entry time ($t_a$) are stored as an entry data record (12) and the exit image ($P_b$) and the exit time ($t_b$) are stored as an exit data record (13), and if said comparison (41) indicates a speed that exceeds the threshold value, the entry data record (12) and the exit data record (13) are output (46), and if no speeding is indicated, the entry data record (12) and the exit data record (13) are deleted (49, 50).

**8.** The method according to any one of claims 1 to 7, **characterized in that** the object identifier ($c_i$) is randomly selected (30).

**9.** The method according to any one of claims 1 to 7, **characterized in that** the object identifier ($c_i$) is consecutively taken (30) from a sequence of unique identifiers.

**10.** A device for recording images of vehicles (2) that pass through a section (3) between an entrance (4) and an exit (5) at excessive speed, comprising:

> a first timekeeper unit (6, 8) disposed at the entrance (4), which is configured for capturing the entry time ($t_a$) of a vehicle (2);
> a processor (8), which is configured for generating a unique object identifier ($c_i$), which is independent from the actual identity of the vehicle, for the vehicle (2) and for storing the entry time ($t_a$) under the object identifier ($c_i$) in a memory (10);
> a sensor arrangement (TR), which is configured for receiving the object identifier ($c_i$) from the processor (8) and tracking the vehicle (2) that is referenced by way of the object identifier ($c_i$) over the entire section (3);
> a second timekeeper unit (7, 9) disposed at the exit (5), which is configured for capturing the exit time ($t_b$) of the vehicle (2) that is referenced by way of the object identifier ($c_i$); and
> an evaluation unit (9), which is configured for determining the entry time ($t_a$) stored under the object identifier ($c_i$) and, if a comparison of the captured exit time ($t_b$) to the determined entry time ($t_a$) indicates a speed that exceeds a threshold value, for generating an exit image ($P_b$) of the vehicle (2) by way of a second camera (7) disposed at the exit (3).

**11.** A device for recording images of vehicles (2) that pass through a section (3) between an entrance (4) and an exit (5) at excessive speed, comprising:

> a first camera (6) and a first timekeeper unit (6, 8) disposed at the entrance (4), which are configured for capturing an entry image ($P_a$) and the entry time ($t_a$) of a vehicle (2);
> a processor (8), which is configured for generating a unique object identifier ($c_i$), which is independent from the actual identity of the vehicle, for the vehicle (2) and for storing the entry image ($P_a$) and the entry time ($t_a$) under the object iden-

tifier ($c_i$) in a memory (10);

a sensor arrangement (TR), which is configured for receiving the object identifier ($c_i$) from the processor (8) and tracking the vehicle (2) that is referenced by way of the object identifier ($c_i$) over the entire section (3);

a second timekeeper unit (7, 9), which is configured for capturing the exit time ($t_b$) of the vehicle (2) that is referenced by way of the object identifier ($c_i$); and

an evaluation unit (9), which is configured for determining the entry time ($t_a$) stored under the object identifier ($c_i$) and, if a comparison of the captured exit time ($t_b$) to the determined entry time ($t_a$) indicates a speed that exceeds a threshold value, for determining the entry image ($P_a$) stored under the object identifier ($c_i$), or otherwise deleting the entry image ($P_a$) stored under the object identifier ($c_i$).

**12.** The device according to claim 10 or 11, **characterized in that** the sensor arrangement (TR) comprises at least two radar devices (15, 16) contiguously capturing the section (3) without interruption and is configured to detect and track the vehicle (2) in the radar images (25, 26) of the radar devices (15, 16).

**13.** The device according to claim 10 or 11, **characterized in that** the sensor arrangement (TR) comprises at least two cameras contiguously capturing the section (3) without interruption and is configured to detect and track the vehicle (2) in the camera images (25', 26') of the cameras.

**14.** The device according to any one of claims 11 to 13, **characterized by** a second camera (7) disposed at the exit (5) for capturing an exit image ($P_b$) of the vehicle (2), wherein the evaluation unit (9) is configured to delete the exit image ($P_b$) if said comparison does not indicate a speed that exceeds the threshold value.

**15.** The device according to any one of claims 11 to 13, **characterized in that** the evaluation unit (8) is configured to capture an exit image ($P_b$) of the vehicle (2) using a second camera (7) disposed at the exit (5) if said comparison indicates a speed that exceeds the threshold value.

**Revendications**

**1.** Procédé pour la prise en photographie de véhicules (2) qui parcourent une distance (3) entre une entrée (4) et une sortie (5) à une vitesse trop élevée, comprenant :

une saisie (29) de l'heure d'entrée ($t_a$) d'un véhicule (2) à l'entrée (4), une production (30) d'une identification d'objet ($c_i$) univoque et indépendante de l'identité réelle du véhicule pour le véhicule (2), et une mémorisation (31) de l'heure d'entrée ($t_a$) dans l'identification d'objet ($c_i$),

un suivi (33) du déplacement du véhicule (2), lequel est, pendant ce temps, continuellement référencé par l'identification d'objet ($c_i$) sur la distance (3) complète à l'aide d'un ensemble de capteurs (TR),

une saisie (36, 37) de l'heure de sortie ($t_b$) du véhicule (2) référencé par l'identification d'objet ($c_i$) à la sortie (5), et

lorsqu'une comparaison (41) de l'heure de sortie ($t_b$) saisie avec l'heure d'entrée ($t_a$) mémorisée montre une vitesse dépassant une valeur de seuil (s) : une saisie (37, 45) d'une image de sortie ($P_b$) du véhicule (2) à la sortie (5).

**2.** Procédé de prise en photographie de véhicules (2) qui parcourent une distance (3) entre une entrée (4) et une sortie (5) à une vitesse trop élevée, comprenant :

une saisie (29) d'une image d'entrée ($P_a$) et de l'heure d'entrée ($t_a$) d'un véhicule (2) à l'entrée (4), une production (30) d'une identification d'objet ($c_i$) univoque et indépendante de l'identité réelle du véhicule pour le véhicule (2), et une mémorisation (31) de l'image d'entrée (Pa) et de l'heure d'entrée ($t_a$) dans l'identification d'objet ($c_i$),

un suivi (33) du déplacement du véhicule (2), lequel est, pendant ce temps, continuellement référencé par l'identification d'objet ($c_i$) sur la distance (3) complète à l'aide d'un ensemble de capteurs (TR),

une saisie (36, 37) de l'heure de sortie ($t_b$) du véhicule (2) référencé par l'identification d'objet ($c_i$) à la sortie (5), et

lorsqu'une comparaison (41) de l'heure de sortie ($t_b$) saisie avec l'heure d'entrée ($t_a$) mémorisée montre une vitesse dépassant une valeur de seuil (s) : une détermination (43, 44) de l'image d'entrée ($P_a$) mémorisée dans l'identification d'objet ($c_i$),

dans le cas contraire : un effacement (49) de l'image d'entrée ($P_a$) mémorisée dans l'identification d'objet ($c_i$).

**3.** Procédé selon la revendication 1 ou 2, **caractérisé en ce que** le suivi (33) est effectué au moyen d'un ensemble de capteurs (TR) constitué d'au moins deux appareils radar (15, 16) se succédant balayant la distance (3) sans relâche, dans les images radar (25, 26) de ceux-ci le véhicule (2) est détecté et suivi.

**4.** Procédé selon la revendication 1 ou 2, **caractérisé**

**en ce que** le suivi (33) est effectué à l'aide d'un ensemble de capteurs (TR) constitué d'au moins deux caméras se succédant balayant la distance (3) sans relâche, dans les images (25, 26) de celles-ci le véhicule (2) est détecté et suivi.

5. Procédé selon l'une des revendications 2 à 4, **caractérisé en ce qu'**avec l'heure de sortie ($t_b$), également une image de sortie ($P_b$) du véhicule (2) est saisie (37) et mémorisée, et que l'image de sortie ($P_b$) est effacée (50) lorsque ladite comparaison (41) n'indique pas une vitesse dépassant une valeur de seuil.

6. Procédé selon l'une des revendications 2 à 4, **caractérisé en ce qu'**uniquement lorsque ladite comparaison (41) indique une vitesse dépassant une valeur de seuil, une image de sortie ($P_b$) du véhicule (2) est saisie et mémorisée.

7. Procédé selon la revendication 5 ou 6, **caractérisé en ce que** l'image d'entrée ($P_a$) et l'heure d'entrée ($t_a$) sont mémorisées en tant que série de données d'entrée (12) et l'image de sortie ($P_b$) et l'heure de sortie ($t_b$) sont mémorisées en tant que série de données de sortie (13) et que, lorsque ladite comparaison (41) indique une vitesse dépassant une valeur de seuil, la série de données d'entrée (12) et la série de données de sortie (13) sont dévoilées (46), et si non, la série de données d'entrée (12) et la série de données de sortie (13) sont effacées (49, 50).

8. Procédé selon l'une des revendications 1 à 7, **caractérisé en ce que** l'identification d'objet ($c_i$) est choisie au hasard (30).

9. Procédé selon l'une des revendications 1 à 7, **caractérisé en ce que** l'identification d'objet ($c_i$) est continuellement prise (30) d'une suite d'identifications univoques.

10. Dispositif pour la prise en photographie de véhicules (2) qui parcourent une distance (3) entre une entrée (4) et une sortie (5) à une vitesse trop élevée, avec un premier équipement donnant l'heure (6, 8) disposé à l'entrée (4), qui est conçu pour la saisie d'une heure d'entrée ($t_a$) d'un véhicule (2), un équipement de calcul (8) qui est conçu pour la production d'une identification d'objet ($c_i$) univoque et indépendante de l'identité réelle du véhicule pour le véhicule (2) et la mémorisation de l'heure d'entrée ($t_a$) dans l'identification d'objet ($c_i$) dans une mémoire (10), un ensemble de capteurs (TR) qui est conçu pour recevoir l'identification d'objet ($c_i$) à partir de l'équipement de calcul (8) et pour le suivi du véhicule (2) référencé par l'identification d'objet ($c_i$) sur la distance (3) totale,

un deuxième équipement donnant l'heure (7, 9) disposé à la sortie (5), qui est conçu pour la saisie de l'heure de sortie ($t_b$) du véhicule (2) référencé par l'identification d'objet ($c_i$), et un équipement d'évaluation (9) qui est conçu pour déterminer l'heure d'entrée ($t_a$) mémorisée dans l'identification d'objet ($c_i$) et, lorsqu'une comparaison de l'heure de sortie ($t_b$) avec l'heure d'entrée ($t_a$) déterminée indique une vitesses dépassant une valeur de seuil, produire une image de sortie ($P_b$) du véhicule (2) au moyen d'une caméra (7) disposée à la sortie (3).

11. Dispositif pour la prise en photographie de véhicules (2), qui parcourent une distance (3) entre une entrée (4) et une sortie (5) à une vitesse trop élevée, avec :

une première caméra (6) et un premier équipement donnant l'heure (6, 8) disposés à l'entrée (4), qui sont conçus pour la saisie d'une image d'entrée ($P_a$) et de l'heure d'entrée ($t_a$) d'un véhicule (2), un équipement de calcul (8) qui est conçu pour la production d'une identification d'objet ($c_i$) univoque et indépendante de l'identité réelle du véhicule pour le véhicule (2) et pour la mémorisation de l'image d'entrée ($P_a$) et de l'heure d'entrée ($t_a$) dans l'identification d'objet ($c_i$) dans une mémoire (10), un ensemble de capteurs (TR) qui est conçu pour recevoir l'identification d'objet ($c_i$) à partir de l'équipement de calcul (8), et pour le suivi du véhicule (2) référencé par l'identification d'objet ($c_i$) sur la distance (3) totale, un deuxième équipement donnant l'heure (7, 9), qui est conçu pour la saisie de l'heure de sortie ($t_b$) d'un véhicule (2) référencé par l'identification d'objet ($c_i$), et un équipement d'évaluation (9) qui est conçu pour déterminer l'heure d'entrée ($t_a$) mémorisée dans l'identification d'objet ($c_i$) et, lorsqu'une comparaison de l'heure de sortie ($t_b$) avec l'heure d'entrée ($t_a$) déterminée indique une vitesse dépassant une valeur de seuil, déterminer l'image d'entrée ($P_a$) mémorisée dans l'identification d'objet ($c_i$) ou autrement, effacer l'image d'entrée ($P_a$) mémorisée dans l'identification d'objet ($c_i$).

12. Dispositif selon la revendication 10 ou 11, **caractérisé en ce que** l'ensemble de capteurs (TR) comprend au moins deux appareils radar (15, 16) se succédant balayant sans relâche la distance (3) et est conçu pour détecter et suivre le véhicule (2) par les images radar (25, 26) des appareils radar (15, 16).

13. Dispositif selon la revendication 10 ou 11, **caractérisé en ce que** l'ensemble de capteurs (TR) comprend au moins deux caméras se succédant balayant sans relâche la distance (3) et conçues pour détecter et suivre le véhicule (2) dans les images de caméra (25', 26') des caméras.

**14.** Dispositif selon l'une des revendications 11 à 13, **caractérisé en ce qu'**une deuxième caméra (7) disposée à la sortie (5) est conçue pour une saisie d'une image de sortie ($P_b$) du véhicule (2), dans lequel l'équipement d'évaluation (9) est conçu pour effacer l'image de sortie ($P_b$) lorsque ladite comparaison n'indique pas de vitesse dépassant une valeur de seuil.

**15.** Dispositif selon l'une des revendications 11 à 13, **caractérisée en ce que** l'équipement d'évaluation (8) est conçu pour une saisie d'une image de sortie ($P_a$) du véhicule (2) au moyen d'une deuxième caméra (7) disposée à la sortie (5) lorsque ladite comparaison indique une vitesse dépassant une valeur de seuil.

*Fig. 1*

*Fig. 2*

**IN DER BESCHREIBUNG AUFGEFÜHRTE DOKUMENTE**

**In der Beschreibung aufgeführte Patentdokumente**

- EP 2469497 A1
- CN 101800890 A
- CN 101593422 A
- CN 102254429 A
- TW 200905619 A
- TW 200905620 A